Europäisches Patentamt

European Patent Office

Office européen des brevets

(19)

(11) Publication number: **0 458 004 A1**

## EUROPEAN PATENT APPLICATION

(21) Application number: 90850216.4

(51) Int. Cl.5: **G01L 3/10**

(22) Date of filing: **25.05.90**

(43) Date of publication of application:
**27.11.91 Bulletin 91/48**

(84) Designated Contracting States:
**AT BE CH DE DK ES FR GB GR IT LI LU NL SE**

(71) Applicant: **SKF Nova AB**

**S-415 50 Göteborg(SE)**

(72) Inventor: **Adolfsson, Rune**
**Bandholzgatan 35**

**S-43252 Varberg(SE)**
Inventor: **Landaeus, Kjell**
**293, Chemin des Meillières Est.**
**F-06140 Vence(FR)**
Inventor: **Tyrén, Carl**
**12, Boulevard, Albert 1**
**F-06600 Antibes(FR)**

(74) Representative: **Forsberg, Lars-Ake et al**
**SKF NOVA AB Patent Department**
**S-415 50 Göteborg(SE)**

(54) **Method and device for mounting a thin element on a body.**

(57) A method and a means for retaining a thin element (10), such as a sensor element, on a body (11) in that the element (10) by means of a press member (13) and a member (12) of an elastomeric material provided between the element (10) and the press member (13) is pressed against the body (11) to be held in friction grip therewith.

The press member (13) is caused to be radially compressed for the purpose of ascertaining that a pressure acting upon the element (10) is obtained in said member (12) and of a size required for maintaining said friction grip, when the body (11) is subjected to torsion or length alterations.

FIG. 2

EP 0 458 004 A1

The present invention refers to a method for mounting a thin element, such as a sensor element, on a body in that the element by aid of a press member and a member of an elastomeric material provided between the element and the press member is pressed against the body to be held in friction grip therewith. The invention also refers to a means for performing this method.

It is earlier known to attach a thin sensor element on a shaft by means of a sleeve of memory metal having a bigger inner diameter than the shaft, whereby the sleeve is thread upon the shaft for subsequently being brought to obtain a smaller diameter, by means of heating, in order to cause the sleeve to retain the sensor in a friction engagement with the surface of the shaft.

Such an arrangement at torque transmitters is shown in EP-A-107082, whereby shaft, sensor and sleeve rotate as a unit. For ascertaining that the friction force between the sensor element, the shaft and the sleeve thereby shall become big enough to ascertain that no sliding will occur therebetween, is required high pressures, which in turn implies that the sleeve must be comparatively thick-walled. The use of a thick-walled sleeve gives the drawback that the sleeve will stiffen the shaft with less distortion of the shaft and lower sensitivity as a result. Furthermore a thick-walled sleeve will result in that recording apparatuses, such as a coil, will be situated at a bigger radial distance from the sensor element, and this will also influence the sensitivity negatively.

It also has been suggested for measurement of the internal pressure in a tube, to squeeze a sensor element on the tube by menas of a clamping member and an element of elastomeric material provided between the clamping member and the sensor element. Such an arrangement, which is shown in US-A-4194401, intends to provide a rapid and simple snap-in attachment of pressure sensors to injection pipes for diesel engines for recording the pressure pulses occuring at fuel injection.

An embodiment of the type described in US-A-4194401 is not useful for measurement of stresses in rotating shafts. The sensor elements used in the embodiment according to US-A-4194401 are furthermore ordinary strain gauges or of piezo electric type and they therefore have not the attachment problems associated with the use of sensors made from amorphous magneto-elastic materials, which preferably may be used at the present invention.

The purpose of the present invention is to provide a method and a means of the type mentioned in the introduction, wherein the distortion of the press member is substantially disconnected in relation to the shaft and where consequently the shaft and the senor element only are deformed as a unit at loading and where a high sensitivity is obtained.

Another purpose of the invention is to provide a method and a means for accurate measuring of stresses in rotary shafts.

The invention is described hereinafter with reference to the accompanying drawings, in which is shown an embodiment for exemplificatory reasons. This embodiment is intended only to illustrate the invention, which may be modified within the scope of the claims.

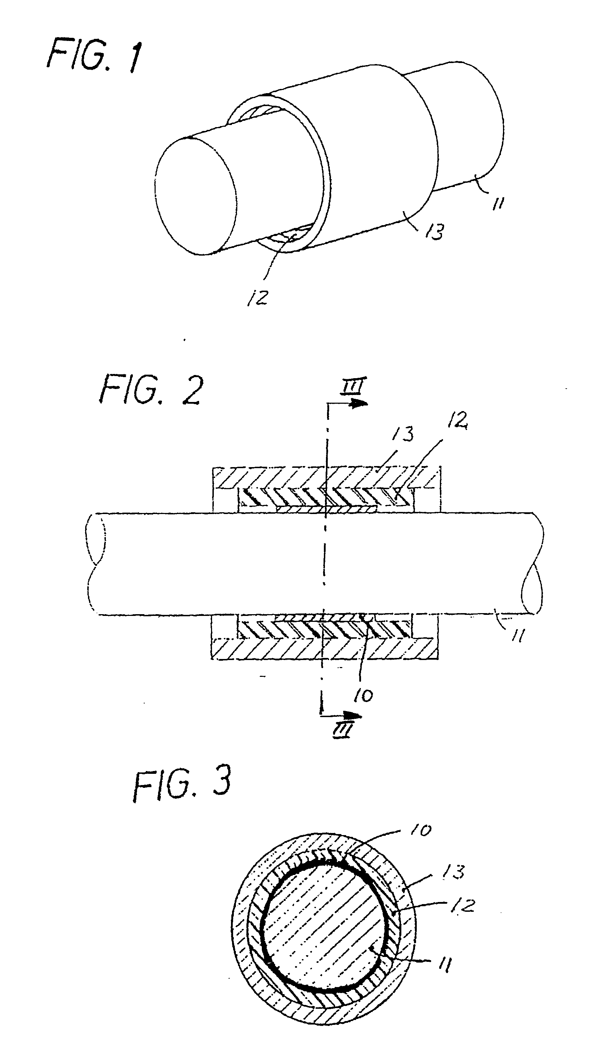

In the drawings Fig. 1 shows a perspective view of an embodiment according to the invention, where a press member designed as a sleeve has been positioned around a shaft with associated sensor element.

Fig. 2 is an axial section of the means according to Fig. 1.

Fig. 3 is a section along line III-III in Fig. 2.

Fig. 4 shows a view corresponding to the one in Fig. 2 after radial compression of the sleeve.

Fig. 5 shows schematically how the the radial compression of the sleeve in Fig. 4 can be accomplished.

At the embodiment of the invention illustrated in the drawings a thin element 10 is intended to be pressed against a shaft 11 by means of a sleeve-shaped press member 13 and a member 12 of elastomeric material provided between the press member and the element 10. The element 10 is a very thin lamina-shaped element, e.g. a strip of foil. According to a preferred embodiment the element 10 is a sensor in form of an amorphous magneto-elastic material. However, it is generally possible to use also other thin elements, e.g. a strip of foil provided with measuring threads, which by friction can be retained at the surface of the shaft for following the surface movements at torsion, elongation or compression of the shaft. The force measurement at use of an amorphous magneto-elastic material is based on the known condition that the magnetic properties of amorphous magneto-elastic materials are altered in dependency of the state of strain in the material.

The member or the layer 12 may be e.g. rubber or plastics and it may be formed as a sleeve or arranged as a band around the shaft.

In the embodiment shown, the layer 12 is enclosed by the press member 13 formed as a metallic sleeve, which sleeve is slid over the layer 12 and then has the form of a straight cylinder such as shown in Fig. 1. As shown in Fig. 2 the sleeve 13 has bigger axial length than layer 12, which again on both sides extends axially outside the element 10.

When the sleeve has been pushed in on the shaft 11 over the elastomeric layer 12, such a high pressure is applied on the outer envelope surface of the sleeve, that the sleeve 13 is plastically deformed. This results in a remanent pressure in the elastomeric layer 12 when the external pressure is relieved.

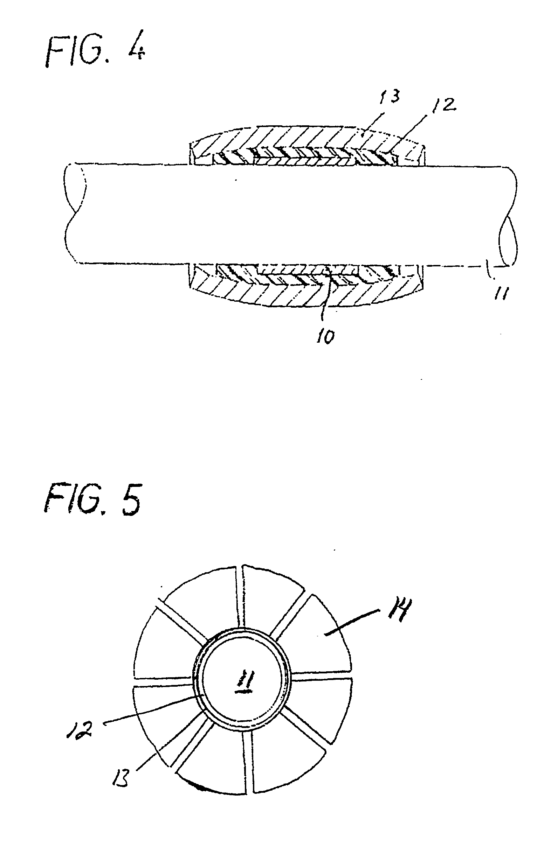

The plastic deformation of the sleeve 13, as schematically illustrated in Fig. 5, may be effected e.g. by a hydraulic pressure means incorporating a plurality of jaws 14, which are movable radially. The pressure remaining in the elastomeric layer 12 after removal of the external pressure now will act upon the layer 10 at a size sufficient for securing that the layer 10 due to friction will follow the movements of the shaft at rotation and/or length alterations.

Due to the positioning of the elastomeric layer 12 between the shaft 11 with the sensor 10 and the sleeve 13 it can be considered, that the distortion of the sleeve when a torque is applied to the shaft, is disconnected in relation to the shaft, and consequently it is mainly the shaft 11 and the sensor 10 which turn as a unit under such load. The elastomeric layer is so soft in relation to sensor and shaft, which is presupposed to be made from metal, that the distortion of the sleeve may be quite neglected.

Due to the fact that the modul of shearing of the layer 12 may be thousands of times lower than the modul of shearing of the shaft 11 and the element 10, the shearing stress in the layer 12 will be neglectable relative to the friction force acting between the surfaces of the shaft 11 and the element 10. Hereby it is evident, that the element 10 is subjected mainly to the same deformation as the shaft 11, whereas the layer acts as a fluid when compared to the metal of element, shaft and sleeve. It thus is possible to consider the sleeve 13 as uninfluenced by the deformations of the shaft 11.

Fig. 2 shows the appearance of a device according to the invention prior to deformation of the sleeve 13 and Fig. 4 shows the same device after deformation. It can be seen that if the ends of the sleeve 13 extend beyond the elastomeric layer 12 and the element 10, after compression of the sleeve it is achieved a constriction of the ends of the sleeve 13. This is favourable as the elastomeric layer is thereby prevented from flowing out axially.

As mentioned above the invention is particularly intended to be used for contact-free measurement of torques acting upon the shaft. The invention is thereby particularly intended to be used at sensors of amorphous magneto-elastic material, which have very high sensitivity. In a manner known per se one or more pick-up coils thereby can be arranged to surround the shaft 11 and the sensor 10 made from amorphous, magneto-elastic material. An excitation coil, which is connectable to a drive source, can be arranged to enclose the sensor 10 and said pick-up coils. When a magnetic field is applied over the pick-up coils by means of the excitation coil, a current is induced in the pick-up coils, which induced current is influenced by the amorphous material situated inside the coils. The output from the pick-up coils thus depends on the magnetic properties of the sensor 10 and as these properties vary in dependency of the mechanical strain condition in the sensor 10, the output from the pick-up coils will represent an expression for the stresses prevailing in the shaft 11.

According to the invention, the possibility to make the sleeve 13 thin-walled gives the advantage that it will be more easy to sense the magnetic signals from the sensor 10 with the pick-up coils, as the pick-up coil will come closer to the sensor 10 and said signals need not pass a big mass of metal.

Instead of a purely mechanical deformation of the sleeve 13 it is possible that the sleeve can be tightened against the layer 12 of elastomeric material by the sleeve being crimped on the shaft or in that the sleeve is made from metal and is caused to be radially compressed in that the shape memory properties of the memory metal is utilized.

## Claims

1. A method for mounting a thin element, such as a sensor element, on a body (11) in that the element (10) by aid of a press member (13) and a member (12) of an elastomeric material provided between the element (10) and the press member (13) is pressed against the body (11) to be held in friction grip therewith, **characterized therein,** that the press member (13) is caused to be radially compressed for the purpose of ascertaining that a pressure acting upon the element (10) is obtained in said member (12) and of a size required for maintaining said friction grip, when the body (11) is subjected to torsion or length alterations.

2. A method as claimed in claim 1, **characterized therein,** that the press member (13) is subjected to an external pressure of a size sufficient for ascertaining that a remanent pressure acting on the element (10) is obtained in said member (12) when the external pressure is relieved.

3. A method as claimed in claim 2, **characterized therein,** that the press member (13) is plastically deformed by the external pressure.

4. A method as claimed in claim 3, **characterized therein,**

that the external pressure is applied around the body (11).

5. A method as claimed in claim 1,
**characterized therein,**
that the press member (13) is caused to be radially compressed by being crimped on said body (11).

6. A method as claimed in claim 1,
**characterized therein,**
that the press member (13) is caused to be radially compressed by using the shape memory properties of the press member (13), which is manufactured from memory metal.

7. A device for mounting a thin element, such as a sensor element, on a body (11) incorporating a press member (13) and a member (12) of an elastomeric material provided between the element (10) and the press member (13),
**characterized therein,**
that the press member (13) is adapted to be radially compressed for the purpose of ascertaining that a pressure acting upon the element (10) is obtained in the said member (12) and having a size required for maintaining said friction grip, when the body (11) is subjected to torsion or length alterations.

8. A device as claimed in claim 7,
**characterized therein,**
that the press member (13) extends axially beyond said member (12), which on its part extends axially outside said element (10).

9. A device as claimed in claim 7 or 8,
**characterized therein,**
that said member (12) consists of an elastomeric material, such as rubber or plastics.

10. A device as claimed in anyone of claims 7-9,
**characterized therein,**
that the pressure member (13) is arranged to be mechanically compressed by application of an external pressure on the press member and being of a size required for ascertaining that a remanent pressure acting upon the element (10) is obtained in said member (12) when the external pressure is relieved.

11. A device as-claimed in anyone of claims 7-10,
**characterized therein,**
that the pressure member (13) is sleeve-shaped.

12. A device as claimed in claim 11,
**characterized therein,**
that the pressure member is made from memory metal.

FIG. 1

FIG. 2

FIG. 3

FIG. 4

FIG. 5

# EUROPEAN SEARCH REPORT

**EP 90 85 0216**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 288 049  (ASEA)<br>* Column 1, lines 51-55; column 2, lines 1-44; fig. *<br>– – – | 1 | G 01 L 3/10 |
| D,A | EP-A-0 107 082  (TOKYO SHIBAURA DENKI K.K.)<br>* Page 8, lines 10-33; figures 3a-3d *<br>– – – – – | 1 | |

|  | TECHNICAL FIELDS SEARCHED (Int. Cl.5) |
|---|---|
|  | G 01 L |

The present search report has been drawn up for all claims

| Place of search | Date of completion of search | Examiner |
|---|---|---|
| The Hague | 11 January 91 | ZAFIROPOULOS N. |